# EUROPÄISCHE PATENTSCHRIFT

(11) **EP 3 475 566 B1**
(45) Veröffentlichungstag und Bekanntmachung des Hinweises auf die Patenterteilung: **29.01.2020**
(21) Anmeldenummer: 17732890.3
(22) Anmeldetag: 23.06.2017
(51) Int. Cl.: F03G 6/00, B01D 5/00, F24S 40/50, F24S 40/58, F28D 20/00, F24S 80/20, F24S 40/60, F24S 60/10

(54) **VERFAHREN ZUR GASABTRENNUNG AUS HOCHTEMPERATUR-WÄRMETRÄGERFLUIDEN IN SOLARWÄRMEKRAFTWERKEN**
METHOD FOR GAS REMOVAL FROM HIGH-TEMPERATURE HEAT-TRANSFER FLUIDS IN SOLAR THERMAL POWER PLANTS
PROCÉDÉ DE SÉPARATION DE GAZ DE FLUIDES CALOPORTEURS À HAUTE TEMPÉRATURE DANS DES CENTRALES HÉLIOTHERMIQUES

(43) Veröffentlichungstag der Anmeldung: 01.05.2019
(73) Patentinhaber: Wacker Chemie AG, 81737 München (DE)
(72) Erfinder: VOIT, Harald, 84571 Reischach (DE); DOERRICH, Steffen, 81827 München (DE); GEIGER, Verena, 84489 Burghausen (DE); PETRI, Martin, 84547 Emmerting (DE); SCHAFFER, Erich, 5122 Duttendorf (AT); STARY, Fridolin, 84489 Burghausen (DE)
(74) Vertreter: Mai, Marit
(86) Internationale Anmeldenummer: PCT/EP2017/065572
(87) Internationale Veröffentlichungsnummer: WO 2018/233848

(56) Entgegenhaltungen:
- WO-A1-2006/081608
- DE-A1-102010 039 813
- DE-A1-102011 001 587
- US-A- 4 413 615
- US-A1- 2011 146 959

## Beschreibung

Die Erfindung betrifft ein Verfahren zur Entfernung von gasförmigen Zersetzungsprodukten aus Hochtemperatur-Wärmeträgerfluid eines sich in Betrieb befindenden Solarwärmekraftwerks.

Ein Sonnenwärmekraftwerk oder Solarwärmekraftwerk ist ein Kraftwerk, das die Wärme der Sonne über Absorber als primäre Energiequelle verwendet. Daher sind daneben die Bezeichnungen solarthermisches Kraftwerk oder thermisches Solarkraftwerk üblich, auch CSP-Kraftwerk (Concentrated Solar Power Kraftwerk) für ein Kraftwerk mit Strahlungsbündelung.
Im Absorber erwärmt die Sonnenstrahlung ein Solarfeld durchströmendes Hochtemperaturwärmeträgerfluid (HTF)auf hohe Temperaturen. Die an das HTF übertragene Wärmeenergie wird im HTF-Kreislauf schließlich an einen Wärmeverbraucher (i.d.R. ein thermisches Dampfkraftwerk) abgegeben, wodurch das HTF wieder abgekühlt und danach erneut den Absobern zugeführt wird.
Mehrere Absorber sind i.d.R. in Reihe zu Loops verschaltet, i.d.R. sind mehrere Loops parallel zu einem Solarfeld (S) verschaltet.

In Folge von hohen Temperaturbelastungen innerhalb eines Solarwärmekraftwerks entstehen in den verwendeten Wärmeträgerfluiden kontinuierlich gasförmige bzw. leichtsiedende Zersetzungsprodukte (bei Silikonölen v.a. H₂, CH₄, C₂H₆), die im Betrieb abgetrennt werden müssen, um die einwandfreie Funktion des Kraftwerks sicherstellen zu können.

Stand der Technik für die Abtrennung von Zersetzungsprodukten aus Hochtemperaturwärmeträger-ölen wie z.B. Biphenylen in CSP-Kraftwerken ist entweder der teilweise oder komplette Austausch des Wärmeträgerfluids mit externer Aufbereitung oder die Insitu-Aufbereitung in sogenannten Aufbereitungsanlagen, die aus der Verschaltung von bis zu 3 Kolonnen bestehen, wie in DE102011001587A1 beschrieben.

Für den Austausch des Wärmeträgerfluids muss eine sehr grosse Menge an Wärmeträgerfluid bereitgestellt werden, welche das zu reinigende Wärmeträgerfluid ersetzt, damit das CSP-Kraftwerk weiterbetrieben werden kann.

Gegenstand der Erfindung ist ein Verfahren zur Entfernung von gasförmigen Zersetzungsprodukten aus Hochtemperatur-Wärmeträgerfluid HTF eines sich in Betrieb befindenden Solarwärmekraftwerks mit einem HTF Kreislauf,
bei dem regelmäßig im Tag-Nacht Zyklus eine Volumenerhöhung des HTF im HTF Kreislauf erfolgt, welche durch Sonneneinstrahlung in einem mit HTF durchströmten Solarfeld und dadurch verursachte Erwärmungen bei Tag verursacht wird und das durch die Volumenerhöhung gebildete zusätzliche Volumen aus dem HTF Kreislauf in einen Expansions-Behälter aufgefangen wird,
ein Teil des zusätzlichen Volumens des HTF in einen mit geringerem Druck betriebenen Drainage-Behälter überführt wird, in welchem gasförmige Zersetzungsprodukte und leichtsiedende Bestandteile aus dem HTF entweichen, wobei die leichtsiedenden Bestandteile kondensiert werden,
und während der bei der nächtlichen Abkühlung erfolgenden Volumenkontraktion des HTF ein Teil des zusätzlichen Volumens des HTF aus dem Drainage-Behälter in den Expansions-Behälter und aus dem Expansions-Behälter in den HTF Kreislauf oder direkt vom Drainage-Behälter in den HTF Kreislauf zurückgeführt wird,
wobei die durch die Überführungen des HTF freiwerdenden Volumina im Expansionsbehälter und Drainage-Behälter mit Inertgas aufgefüllt werden.

Im Solarwärmekraftwerk finden starke Temperaturunterschiede im Solarfeld zwischen Tag und Nacht statt.
Bei der nächtlichen Abkühlung steigt die Dichte, es kommt zur Volumenkontraktion des HTF im Solarfeld.
Bei der morgendlichen Erwärmung sinkt die Dichte des HTF im Solarfeld, es kommt zur Volumenexpansion des HTF.

Die in jedem Solarwärmekraftwerk auftretende tägliche Volumenänderung des HTF wird in Verbindung mit einem in jedem Solarwärmekraftwerk vorhandenem Expansions-Behälter mit einem zusätzlichen Drainage-Behälter (auch overflow vessel genannt) genutzt, um in geeigneter und vorteilhafter Ausführung, Verschaltung und Regelung damit gleichzeitig gasförmige Zersetzungsprodukte im Betrieb abzutrennen.

Die Aufbereitung des HTF erfolgt im Solarwärmekraftwerk kontinuierlich, ohne dass eine zusätzliche Aufbereitungsanlage bestehend aus bis zu 3 Kolonnen, wie in DE 102011001587A1 beschrieben, benötigt wird.
Die erforderliche zusätzliche Aufarbeitungsanlage für das HTF reduziert sich somit auf ein geeignetes Regelungskonzept, eine Kondensationsvorrichtung und eine Vorrichtung zur Zurückführung des HTF aus dem Drainage-Behälter in den Expansions-Behälter oder direkt in den HTF-Kreislauf, beispielsweise eine Rückförderpumpe.

Die Volumenerhöhung des HTF würde zum Anstieg des Füllstands im Expansions-Behälter führen. Deshalb wird ein Teil des zusätzlichen Volumens des HTF in den Drainage-Behälter überführt. Durch die Entspannung im Drainage-Behälter wird die Löslichkeit von Gasen und leichtsiedenden Bestandteilen des HTF im HTF gesenkt. Dadurch werden die gasförmigen Zersetzungsprodukte aus dem HTF abgetrennt. Gleichzeitig verdampfen dabei leichtsiedende Bestandteile des HTF. Die leichtsiedenden Bestandteile werden kondensiert und können in das HTF, beispielsweise in den Drainage-Behälter zurückgeführt werden.

Die bevorzugt mehrstufige Kondensation stellt die Rückführung leichtsiedender Bestandteile des HTF sicher, während die gasförmigen Zersetzungsprodukte kontinuierlich aus dem HTF entfernt werden. Durch die Kombination des bevorzugt kleiner als der Drainage-Behälter dimensionierten Expansions-Behälters mit einem bevorzugt großen Drainage-Behälter, der bei geringerem Druck betrieben wird, in den hinein die tägliche Volumenänderung verlegt wird, werden sowohl die Investitionskosten als auch der Verbrauch an Inertgas minimiert. Gleichzeitig wird durch die Druckentspannung im Drainage-Behälter die Abtrennung gasförmiger und leichtsiedender Bestandteile bei minimalem Energieaufwand optimiert. Insbesondere ist keine thermische Hilfsenergie für die Entgasung notwendig sondern nur für die Kondensation.

Vorzugsweise sind Expansions-Behälter und/oder Drainage-Behälter mit Druck- und Füllstandsregelung versehen.

Vorzugsweise wird das Inertgas ausgewählt aus He, Ar und Ne, und N₂. Als Inertgas besonders bevorzugt ist N₂.

Im Expansions-Behälter wird vorzugsweise durch Überlagerung mit Inertgas ein ausreichender Druck im HTF Kreislauf sowie eine ausreichende Inertisierung sichergestellt. Gasförmige Zersetzungsprodukte bleiben so im HTF gelöst, eine Phasentrennung und die Gefahr der Kavitation in den Wärmeträgerpumpen wird dadurch verhindert.

Eine bevorzugt angebrachte zusätzliche Füllstandsregelung im Expansions-Behälter steuert bevorzugt ein flüssigkeitsseitiges Flashventil an und entspannt das erforderliche Volumen an HTF in den Niederdruck- Drainage-Behälter.

Durch die Füllstandsregelung im Expansionsbehälter kann die Volumenänderung fast vollständig in den Drainage-Behälter auf niedrigerem Druckniveau verlagert werden. Dadurch können der gesamte Inertgasverbrauch drastisch reduziert sowie ebenfalls die im HTF gelösten Inertgasanteile und Anteile an Zersetzungsprodukten (insbesondere H₂) reduziert werden.

Vorzugsweise werden durch eine Partialkondensation in der Ausatmungsleitung des Drainage-Behälters die leichtsiedenden Bestandteile des HTF aus dem sich im Drainage-Behälter bildenden Gas/Dampfgemisch auskondensiert und in den Drainage-Behälter zurückgeführt.

Die bevorzugte Füllstandsregelung im Expansions-Behälter steuert die Rückförderpumpe an, die das erforderliche HTF Volumen vom Drainage-Behälter in den Expansions-Behälter oder direkt in den HTF-Kreislauf zurückfördert.
Das aus dem Drainage-Behälter entfernte HTF Volumen wird durch Inertgas bei niedrigem Druck ersetzt. Damit wird die Inertisierung im Overflow-Behälter sichergestellt.

Als HTF können Kohlenwasserstoffe, insbesondere synthetische Öle auf Aromatenbasis, wie zwei-, drei- oder vierkernige Phenyl- oder Phenoxyverbindungen eingesetzt werden. Diese zersetzen sich mit der Zeit und es bilden sich leichtsiedende Anteile aus meist einkernigen Molekülen.

Insbesondere werden als HTF Siliconöle, wie Helisol® (Wacker Chemie AG) eingesetzt, da hierbei keine schwersiedenden Zersetzungsprodukte entstehen. Vorzugsweise besteht die HTF im Wesentlichen aus Methylpolysiloxanen, insbesondere aus linearen oder cyclischen Methylpolysiloxanen oder Gemischen davon.

Bevorzugt sind Methylpolysiloxane, ausgewählt aus linearen Verbindungen der allgemeinen Formel I

Me₃SiO-(Me₂SiO)ₓ-SiMe₃ (I),

und cyclischen Verbindungen der allgemeinen Formel II

(Me₂SiO)_{y} (II),

und deren Gemischen, wobei
- Me: Methylrest bedeutet,
- x: Werte größer oder gleich Null aufweist und der mit den Stoffmengenanteilen gewichtete arithmetische Mittelwert von x über alle linearen Methylpolysiloxane zwischen 3 und 20 liegt und
- y: Werte größer oder gleich 3 aufweist und der mit den Stoffmengenanteilen gewichtete arithmetische Mittelwert von y über alle cyclischen Methylpolysiloxane zwischen 3 und 6 liegt.

Die Variable x nimmt bevorzugt Werte zwischen Null und 100, besonders bevorzugt zwischen Null und 70, ganz besonders bevorzugt zwischen Null und 40 an. Der mit den Stoffmengenanteilen gewichtete arithmetische Mittelwert von x über alle linearen Methylpolysiloxane liegt bevorzugt zwischen 4 und 15, besonders bevorzugt zwischen 5 und 10, jeweils einschließlich der genannten Grenzwerte.
Die Variable y nimmt bevorzugt Werte zwischen 3 und 100, besonders bevorzugt zwischen 3 und 70, ganz besonders bevorzugt zwischen 3 und 40 an. Der mit den Stoffmengenanteilen gewichtete arithmetische Mittelwert von y über alle cyclischen Methylpolysiloxane liegt bevorzugt zwischen 3,5 und 5,5, besonders bevorzugt zwischen 4 und 5, insbesondere zwischen 4 und 4,5, jeweils einschließlich der genannten Grenzwerte.

Das Zahlenverhältnis der Me₃Si-Kettenendgruppen in den Verbindungen der allgemeinen Formel I zur Summe aus Me₂SiO-Einheiten in den Verbindungen der allgemeinen Formeln I und II beträgt vorzugsweise mindestens 1 : 2 und höchstens 1 : 10. Das Zahlenverhältnis der Me₃Si-Kettenendgruppen in der allgemeinen Formel I zur Summe aus Me₂SiO-Einheiten in den allgemeinen Formeln I und II beträgt bevorzugt mindestens 1 : 2,5 und höchstens 1 : 8, insbesondere bevorzugt mindestens 1 : 3 und höchstens 1 : 6.

Vorzugsweise beträgt die Summe der Anteile aller cyclischen Methylpolysiloxane der allgemeinen Formel II mindestens 10 Massen-% besonders bevorzugt mindestens 12,5 Massen-%, insbesondere mindestens 15 Massen-% und höchstens 40 Massen-%, besonders bevorzugt höchstens 35 Massen-%, und insbesondere höchstens 30 Massen-%.

Ebenfalls bevorzugt sind Methylpolysiloxane, ausgewählt aus verzweigten Verbindungen der allgemeinen Formel II

(Me₃SiO_{1/2})_{w} (SiO_{4/2})_{z}, (II)

in der
- w: ganzzahlige Werte von 4 bis 20,
- z: ganzzahlige Werte von 1 bis 15,
- Me: Methylrest bedeuten,
umfasst, wobei
die Summe der Anteile aller Siloxane der allgemeinen Formeln I mindestens 95 Massen-%, bezogen auf die gesamte Wärmeträgerflüssigkeit beträgt.

Die Einheiten (Me₃SiO_{1/2})_{w} werden als M-Gruppen und (SiO_{4/2})_{z} als Q-Gruppen bezeichnet.

Vorzugsweise bedeutet w ganzzahlige Werte bis 15.
Vorzugsweise bedeutet z ganzzahlige 1 bis 5.
Vorzugsweise beträgt w + z Werte bis 50, insbesondere bis 20.

Die Viskosität der HTF bei 25°C beträgt bevorzugt 1 bis 100 mPa*s, besonders bevorzugt 1 bis 10 mPa*s, jeweils gemessen mit dem Viskosimeter µVISK der Firma RheoSense Inc..

Die HTF kann in einer monomodalen, bimodalen oder multimodalen Molmassenverteilung vorliegen, gleichzeitig kann die Molmassenverteilung eng oder breit sein.

Die Temperaturen der HTF im Solarfeld im Tagbetrieb betragen vorzugsweise bis 490°C, insbesondere 150°C bis 475°C, insbesondere bevorzugt 300°C bis 450°C.
Die Temperaturen der HTF im Solarfeld im Nachtbetrieb betragen vorzugsweise bis 300°C, insbesondere -40°C bis 280°C, insbesondere bevorzugt 65°C bis 250°C.

Der Druck im HTF Kreislauf beträgt vorzugsweise bis 1 bis 50 bar, insbesondere 15 bis 40 bar, insbesondere bevorzugt 20 bis 35 bar. Die gasförmigen Zersetzungsprodukte sind bei Betriebstemperatur und Betriebsdruck des Drainage-Behälters gasförmig. Die Betriebstemperatur des Drainage-Behälters beträgt vorzugsweise 50°C bis 200°C, insbesondere bevorzugt 65°C bis 180°C.
Der Betriebsdruck (absolut) des Drainage-Behälters beträgt vorzugsweise 0,8 bis 20 bar, insbesondere 1 bis 10 bar. Vorzugsweise liegt der Betriebsdruck des Drainage-Behälters leicht über dem Umgebungsdruck, damit keine Luft eindringt.

Die gasförmigen Zersetzungsprodukte sind bei Silikonölen insbesondere H₂, CH₄, C₂H₆, Trimethylsilane und Tetramethylsilan.

Die leichtsiedenden Bestandteile haben mindestens einen Dampfdruck von 1 mbar bei 20°C.

Die leichtsiedenden Bestandteile sind bei Silikonölen insbesondere Hexamethyldisiloxan, Octamethyltrisiloxan, Hexamethylcyclotrisiloxan (D3), Octamethylcyclotetrasiloxan (D4). Die leichtsiedenden Bestandteile können auch aus dem HTF Kreislauf abgetrennt und als Zwischen- oder Endprodukte in vielen chemischen Prozessen oder Anwendungen eingesetzt werden.

In einer besonderen Ausführungsform wird Wärme in Salzschmelzetanks zwischengespeichert. Dazu wird Wärme aus dem HTF Kreislauf auf Salzschmelze übertragen. Wenn das Solarfeld (S) keine Wärme liefert wird Wärme aus der heißen Salzschmelze in den HTF Kreislauf zurückgeführt. Auf diese Weise kann die Wärmeenergie des HTF kontinuierlich an einen Wärmeverbraucher abgeführt werden.

Die Volumenerhöhung des HTF im HTF Kreislauf in einem Solarwärmekraftwerk zwischen Tag- und Nachtbetrieb beträgt typischerweise 10 bis 50 %, vorzugsweise 20 bis 40 %.

Vorzugsweise werden 10 bis 50 %, insbesondere 20 bis 40 % des zusätzlichen Volumens des HTF in den Drainage-Behälter überführt.

Besonders vorteilhaft ist eine mehrstufige Ausführung der Kondensation der leichtsiedenden Bestandteile aus dem HTF.
Durch die schrittweise Absenkung der Kondensationstemperatur kann eine große Menge an leichtsiedenden Bestandteilen bereits in einem trockenen Luftkühlungskondenator bei einer hohen Kondensationstemperatur von 50 bis 80°C zurückgewonnen werden, der ohne Kühlwasserverbrauch auskommt.

In der ersten Partialkondensationsstufe ist damit bei Verwendung von Siliconöl als HTF sichergestellt, dass Anfrierungen an den Wärmetauscherflächen vermieden werden, da die Kondensationstemperatur über dem Gefrierpunkt der bei der höchstem Temperatur gefrierenden Silikonölkomponente (Hexamethyltrisiloxan D3 bei 63,7°C bei 1 bar) liegt.

Die weiteren Partialkondensatorstufen sind vorzugsweise so konzipiert, dass ein Anfrieren/Abtauen von leichtsiedenden Bestandteilen aus dem HTF, vorzugsweise Siliconölbestandteilen im Tageszyklus möglich ist.
Durch eine Tieftemperaturkondensation in der letzten Partialkondensationsstufe, bei Siliconölen <= - 20°C kann der Verlust an am niedrigsten siedenden Siliconölkomponenten (Hexamethyldisiloxan) auf vernachlässigbar kleine Werte reduziert werden.

Die nichtkondensierbaren gasförmigen Zersetzungsprodukte können aufgrund ihres geringen Massenstroms je nach den lokalen Emissionsgrenzwerten entweder unbedenklich in die Atmosphäre abgegeben oder aber durch eine Fackel verbrannt oder in einem Adsorber (z.B. an Aktivkohle) adsorbiert werden.

Das Verfahren zur Gasabtrennung aus Wärmeträgerfluiden kann damit emissionsfrei gestaltet werden.

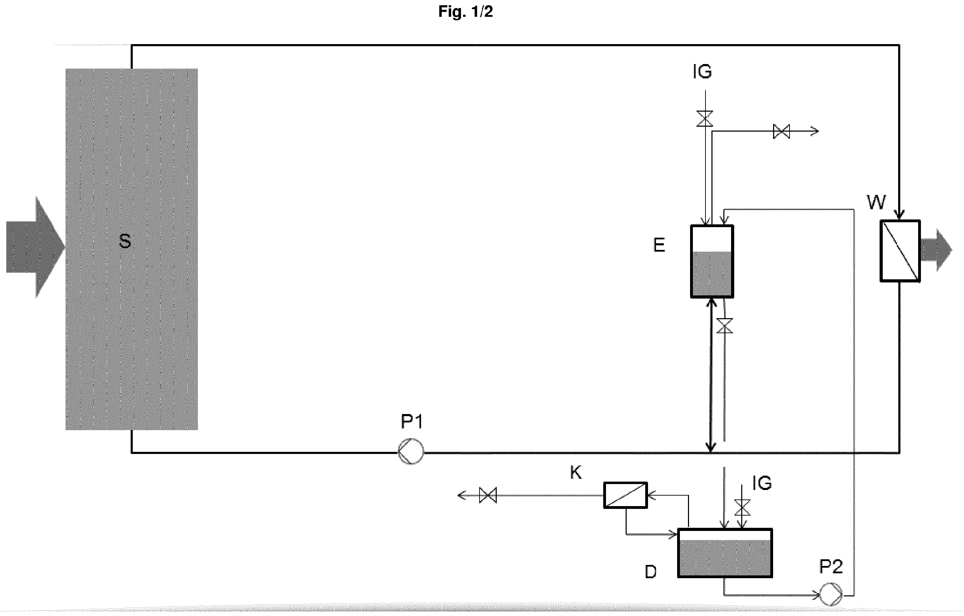

Das Verfahren wird mit Figur 1 erläutert:
In einem Solarwärmekraftwerk erwärmt die Sonneneinstrahlung das Solarfeld (S). Die Wärme wird im Solarfeld (S) durch eine Reihen und Parallelschaltung von Absorbern(Receivern) auf HTF im HTF Kreislauf übertragen, welcher vorzugsweise durch Pumpe (P1) betrieben wird. Die umgepumpte Wärmeenergie wird an einen Wärmeverbraucher (W) abgeführt.
Durch die Erwärmung des HTF erfolgt eine Volumenerhöhung des HTF. Das zusätzliche Volumen des HTF wird in einen Expansions-Behälter (E) aufgefangen, dessen Gasraum mit Inertgas (IG) gefüllt ist. Ein Teil des zusätzlichen Volumens des HTF wird in den Drainage-Behälter (D) überführt.
Im Drainage-Behälter (D) wird ein geringerer Druck eingestellt. Dadurch entweicht ein Gemisch aus gasförmigen Zersetzungsprodukten und leichtsiedenden Bestandteilen aus dem HTF. Das Gemisch wird durch die Kondensationseinrichtung (K) geführt, wo die leichtsiedenden Bestandteile auskondensiert werden. Die leichtsiedenden Bestandteile werden in den Drainage-Behälter (D) zurückgeführt.
Wenn keine Sonneneinstrahlung das Solarfeld (S) trifft, was regelmäßig bei der nächtlichen Abkühlung zutrifft, so erfolgt eine Volumenkontraktion des HTF im HTF Kreislauf.
Ein Teil des HTF aus dem Drainage-Behälter (D) wird vorzugsweise durch Pumpe (P2) in den Expansions-Behälter (E) zurückgepumpt. Der Gasraum des Expansions-Behälters (E) wird mit Inertgas (IG) gefüllt.
Aus dem Expansions-Behälter (E) wird HTF in den HTF Kreislauf zurückgeführt. Alternativ kann ein Teil des HTF aus dem Drainage-Behälter (D) vorzugsweise durch Pumpe (P2)auch direkt in den HTF-Kreislauf zurückgepumpt werden.

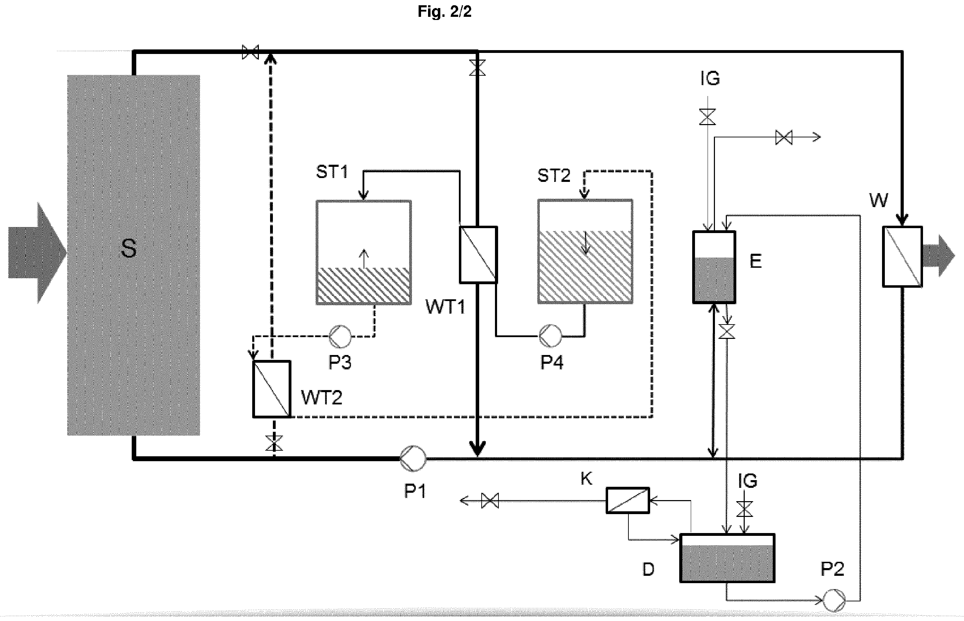

Das Verfahren, bei dem Wärme in Salzschmelzetanks zwischengespeichert wird ist mit Figur 2 erläutert:
Wärme aus dem HTF Kreislauf wird im Wärmetauscher (WT1) auf Salzschmelze übertragen.
Dazu wird kalte Salzschmelze aus Salzschmelzetank (ST2) mittels Pumpe (P4) durch den Wärmetauscher (WT1) gepumpt, dort erwärmt und in den Salzschmelzetank (ST1) gepumpt.
Wenn das Solarfeld (S) keine Wärme liefert wird heiße Salzschmelze aus Salzschmelzetank (ST1) mittels Pumpe (P3)
durch den Wärmetauscher (WT2) gepumpt und überträgt dort Wärme in den HTF Kreislauf. Die abgekühlte Salzschmelze wird im Salzschmelzetank (ST2) gesammelt.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiele

Ein CSP-Kraftwerk mit Salzspeichertanks gibt die Wärme (W) an ein konventionelles Dampfkraftwerk mit der nominellen elektrischen Leistung von 50 MW ab. Das CSP-Kraftwerk wird mit Helisol 5A (Wacker Chemie), einem Gemisch aus Methylpolysiloxanen als HTF betrieben. Im Solarfeld (S) beträgt am Tag die HTF-Eintrittstemperatur 300°C und die HTF-Austrittstemperatur 425°C. In der Nacht kühlt sich das HTF im Mittel auf 200°C ab. Die jährlichen Betriebsstunden bei nomineller Leistung betragen 3219 Stunden. Die Gesamtmasse an HTF im CSP-Kraftwerk beträgt 1200 t. Die tägliche Aufheizzeit bis zum Erreichen der Betriebstemperaturen im Solarfeld beträgt 1 Stunde.

Die Volumenzunahme des HTF während der täglichen Aufheizzeit führt zur Massenverschiebung von 253 t (21% der gesamten HTF-Masse)aus dem HTF-Kreislauf in den Expansionsbehälter (E) und in den Drainagetank (D). Bei der nächtlichen Abkühlung führt die Volumenkontraktion im HTF-Kreislauf zur Massenrückverschiebung aus dem Drainagetank bis in den HTF-Kreislauf. Täglich werden im CSP-Kraftwerk unter diesen Bedingungen 0,03 kg H₂, 2,7 kg Alkane(Methan, Ethan)und 1,6 kg Methylsilane (Trimethyl- und Tetramethylsilan) gebildet, die für einen langjährigen stabilen stationären Betrieb abgetrennt werden müssen.

### Beispiel 1

Der Druck im Expansionsbehälter wird auf 24,8 bar und der Füllstand konstant geregelt. Der Druck im Drainagetank wird auf 1,5 bar geregelt. In beiden Behältern wird zur Druckregelung und gleichzeitigen Inerstisierung Stickstoff bei Umgebungstemperatur eingesetzt. Expansionsbehälter und Drainagetank sind ideal isoliert (Grenzfall).
Beim morgendlichen Aufheizvorgang des Solarfeldes steuert die Füllstandsregelung im Expansionsbehälter ein Flashventil an, das HTF vom Expansionsbehälter in den Drainagebehälter fördert und auf dessen Druck entspannt. Durch eine zweistufige Partialkondensation werden die verdampften leichtsiedenden HTF-Bestandteile vom Inertgas (N₂) und den nichtkondensierbaren Zersetzungsprodukten zurückgewonnen.
Der erste Partialkondensator ist ein trockener Luftkühler, der bei der Kondensationstemperatur von 65°C betrieben wird.
Den ersten Partialkondensator verlassen am Tag nur noch 0,7 t gasförmige und dampfförmige Produkte, die in der zweiten Partialkondensationsstufe nachbehandelt werden. Die zweite Partialkondensationsstufe ist ein Tieftemperaturkondensator, der bei der Kondensationstemperatur von -20°C betrieben wird. Das Abgas des 2. Partialkondensators beträgt nur noch 0,56 t/d und besteht aus > 98% Stickstoff, 0,5 % nicht kondensierbare Gase (Methan und Ethan) sowie < 1,5% leichtsiedende Siloxane und Silane. In Summe beträgt der zu ersetzende HTF-Verlust < 11 kg/d.
Durch den Kondensatrücklauf stellt sich im Drainagetank eine Temperatur von 166°C ein. Der Stickstoffverbrauch im Drainagebehälter für den Volumenausgleich bei der Rückförderung von HTF aus dem Drainagetank in den HTF-Kreislauf bei der nächtlichen Abkühlung beträgt 550 kg/d.
Der Stickstoffverbrauch im Expansionsbehälter ist aufgrund der Füllstandsregelung vernachlässigbar klein.
Im HTF stellen sich folgende stationäre Gaskonzentrationen ein: N₂ 421ppm, H₂ 0,1 ppm, Alkane (Methan, Ethan)< 10 ppm.

### Beispiel 2

Im nicht isolierten Expansionsbehälter und im Drainagetank liegt eine mittlere Temperatur von 200°C vor. Nach der zweistufigen Partialkondensation (Kondensationstemperaturen 65°C und -20°C wie im Beispiel 1) verbleiben 0,57 t/d an Abgas bestehend aus 99% Stickstoff, 0,5% nichtkondensierbaren Gasen (Methan und Ethan) sowie < 0,5% an leichtsiedenden Siloxanen und Silanen. In Summe beträgt der zu ersetzende HTF-Verlust < 6 kg/d.

## Patentansprüche

1. Verfahren zur Entfernung von gasförmigen Zersetzungsprodukten aus Hochtemperatur-Wärmeträgerfluid HTF eines sich in Betrieb befindenden Solarwärmekraftwerks mit einem HTF Kreislauf,
bei dem regelmäßig im Tag-Nacht Zyklus eine Volumenerhöhung des HTF im HTF Kreislauf erfolgt, welche durch Sonneneinstrahlung in einem mit HTF durchströmten Solarfeld und dadurch verursachte Erwärmungen bei Tag verursacht wird und das durch die Volumenerhöhung gebildete zusätzliche Volumen aus dem HTF Kreislauf in einen Expansions-Behälter aufgefangen wird,
ein Teil des zusätzlichen Volumens des HTF in einen mit geringerem Druck betriebenen Drainage-Behälter überführt wird,
in welchem gasförmige Zersetzungsprodukte und leichtsiedende Bestandteile aus dem HTF entweichen, wobei die leichtsiedenden Bestandteile kondensiert werden, und während der bei der nächtlichen Abkühlung erfolgenden Volumenkontraktion des HTF ein Teil des zusätzlichen Volumens des HTF aus dem Drainage-Behälter in den Expansions-Behälter und aus dem Expansions-Behälter in den HTF Kreislauf oder aus dem Drainage-Behälter direkt in den HTF-Kreislauf zurückgeführt wird,
wobei die durch die Überführungen des HTF freiwerdenden Volumina im Expansionsbehälter und Drainage-Behälter mit Inertgas aufgefüllt werden.

2. Verfahren nach Anspruch 1, bei dem das HTF Siliconöl ist.

3. Verfahren nach einem oder mehreren der vorangehenden Ansprüche, bei dem die Kondensation der leichtsiedenden Bestandteile des HTF mehrstufig erfolgt.

4. Verfahren nach einem oder mehreren der vorangehenden Ansprüche, bei dem der Expansions-Behälter kleiner als der Drainage-Behälter dimensioniert ist.

5. Verfahren nach einem oder mehreren der vorangehenden Ansprüche, bei dem das Inertgas ausgewählt wird aus He, Ar, Ne und N₂.

6. Verfahren nach einem oder mehreren der vorangehenden Ansprüche, bei dem die Temperaturen der HTF im Solarfeld im Tagbetrieb 150°C bis 475°C betragen.

7. Verfahren nach einem oder mehreren der vorangehenden Ansprüche, bei dem der Druck im HTF Kreislauf 15 bis 50 bar beträgt.

8. Verfahren nach einem oder mehreren der vorangehenden Ansprüche, bei dem leichtsiedenden Bestandteile mindestens einen Dampfdruck von 1 mbar bei 20°C aufweisen.

9. Verfahren nach einem oder mehreren der vorangehenden Ansprüche, bei dem Wärme in Salzschmelze zwischengespeichert wird.

10. Verfahren nach einem oder mehreren der vorangehenden Ansprüche, bei dem im Expansions-Behälter eine Füllstandsregelung angebracht ist, welche ein flüssigkeitsseitiges Flashventil ansteuert und das in den Drainage-Behälter überführte zusätzliche Volumen des HTF in den Drainage-Behälter entspannt.

## Claims

1. Process for the removal of gaseous decomposition products from high temperature heat transfer fluid HTF of an operational solar thermal power plant having an HTF circuit,
in which a volume increase of the HTF in the HTF circuit which is caused by incident solar radiation in an HTF-traversed solar field and consequent heating by day takes place regularly in a day-night cycle and the additional volume formed by the volume increase is collected from the HTF circuit in an expansion vessel,
a portion of the additional volume of the HTF is transferred into a drainage vessel operated at relatively low pressure
in which gaseous decomposition products and low-boiling constituents escape from the HTF, wherein the low-boiling constituents are condensed,
and during the volume contraction of the HTF occurring during the night-time cooling a portion of the additional volume of the HTF is recycled from the drainage vessel into the expansion vessel and from the expansion vessel into the HTF circuit or directly from the drainage vessel into the HTF circuit,
wherein the volumes in the expansion vessel and drainage vessel becoming vacant as a result of the transferrals of the HTF are filled with inert gas.

2. Process according to Claim 1, in which the HTF is silicone oil.

3. Process according to one or more of the preceding claims, in which the condensation of the low-boiling constituents of the HTF is carried out as a multi-stage condensation.

4. Process according to one or more of the preceding claims, in which the expansion vessel has smaller dimensions than the drainage vessel.

5. Process according to one or more of the preceding claims, in which the inert gas is selected from He, Ar, Ne and N₂.

6. Process according to one or more of the preceding claims, in which the temperatures of the HTF in the solar field in daytime operation are 150°C to 475°C.

7. Process according to one or more of the preceding claims, in which the pressure in the HTF circuit is 15 to 50 bar.

8. Process according to one or more of the preceding claims, in which the low-boiling constituents have a vapour pressure of at least 1 mbar at 20°C.

9. Process according to one or more of the preceding claims, in which heat is intermediately stored in a salt melt.

10. Process according to one or more of the preceding claims, in which the expansion vessel has a fill-level control means installed in it which actuates a liquid-side flash valve and decompresses into the drainage vessel the additional volume of the HTF transferred into the drainage vessel.

## Revendications

1. Procédé pour éliminer des produits de décomposition gazeux hors d'un fluide caloporteur à haute température HTF d'une centrale héliothermique se trouvant en fonctionnement avec un circuit HTF,
dans lequel il se produit régulièrement dans le cycle jour-nuit une augmentation de volume du HTF dans le circuit HTF, qui est causée par le rayonnement solaire dans un champ solaire parcouru par le HTF et les échauffements ainsi provoqués pendant le jour et le volume additionnel formé par l'augmentation de volume est repris hors du circuit HTF par un réservoir d'expansion, une partie du volume additionnel du HTF est transférée dans un réservoir de drainage opérant sous une pression plus faible,
dans lequel des produits de décomposition gazeux et des composants à bas point d'ébullition s'échappent du HTF,
dans lequel on condense les composants à bas point d'ébullition, et
lors de la contraction de volume se produisant lors du refroidissement nocturne une partie du volume additionnel du HTF est renvoyée du réservoir de drainage dans le réservoir d'expansion et du réservoir d'expansion dans le circuit HTF ou du réservoir de drainage directement dans le circuit HTF,
dans lequel les volumes libérés dans le réservoir d'expansion et le réservoir de drainage par les transferts de HTF sont remplis avec un gaz inerte.

2. Procédé selon la revendication 1, dans lequel le HTF est une huile de silicone.

3. Procédé selon une ou plusieurs des revendications précédentes, dans lequel la condensation des composants à bas point d'ébullition du HTF est effectuée en plusieurs étapes.

4. Procédé selon une ou plusieurs des revendications précédentes, dans lequel le réservoir d'expansion est de plus petites dimensions que le réservoir de drainage.

5. Procédé selon une ou plusieurs des revendications précédentes, dans lequel on choisit le gaz inerte parmi He, Ar, Ne et N₂.

6. Procédé selon une ou plusieurs des revendications précédentes, dans lequel les températures du HTF dans le champ solaire en fonctionnement de jour valent 150°C à 475°C.

7. Procédé selon une ou plusieurs des revendications précédentes, dans lequel la pression dans le circuit HTF vaut 15 à 50 bar.

8. Procédé selon une ou plusieurs des revendications précédentes, dans lequel des composants à bas point d'ébullition présentent une pression de vapeur de 1 mbar à 20°C.

9. Procédé selon une ou plusieurs des revendications précédentes, dans lequel on accumule provisoirement de la chaleur dans un bain de sel.

10. Procédé selon une ou plusieurs des revendications précédentes, dans lequel une régulation du niveau de remplissage est installée dans le réservoir d'expansion, elle commande une vanne flash côté liquide et détend dans le réservoir de drainage le volume additionnel du HTF transféré dans le réservoir de drainage.
